# EUROPEAN PATENT APPLICATION

(11) **EP 4 755 756 A2**
(43) Date of publication of application: **10.06.2026**
(21) Application number: 26173749.8
(22) Date of filing: 08.12.2023
(51) Int. Cl.: B62B 9/08

(54) **DRIVE MEMBER, BRAKE MECHANISM, PEDAL STRUCTURE, WHEEL STRUCTURE AND CART**

(30) Priority: 08.12.2022 CN 202211572198; 08.12.2022 CN 202211572764
(62) Divisional of application: 23215266.0
(71) Applicant: Wonderland Switzerland AG, 6312 Steinhausen (CH)
(72) Inventor: CHEN, Yubin, Dongguan, Guangdong, 523648 (CN); WANG, ErXue, Dongguan, Guangdong, 523648 (CN)
(74) Representative: Flentje, Hanno Alexander Peter

(57) **Abstract**

The present disclosure provides a brake mechanism (10) of a cart, a drive member (100) of the brake mechanism (10), a pedal structure (A100), a wheel structure (A1), and a cart, wherein the drive member (100) is arranged in the brake mechanism (10) to be movable between a locking position and an unlocking position, such that the brake mechanism (10) locks or unlocks a wheel (1) of the cart, wherein the drive member (100) has a guiding side face (110), and the guiding side face (110) is provided with a guiding slot (120) including a stop slot (123); wherein the brake mechanism (10) is also provided with a braking member (200), a stop end (210) of the braking member (200) is arranged to move in the guiding slot (120), and by moving the drive member (100) to the locking position toward the locking direction, the stop end (210) moves in the guiding slot (120) to the stop slot (123) along a first direction and stays at the stop slot (123); wherein the drive member (100) is provided with an anti-damage device, and the anti-damage device is arranged such that when a user tends to move the drive member (100) in an incorrect direction, the anti-damage device is able to elastically obstruct or prevent the stop end (210) from moving away from the stop slot (123) in the first direction. According to the disclosure, even if the user accidentally performs a misoperation during the process of unlocking, the drive member (100) can still return to the unlocking position to unlock the wheel (1).

## Description

### TECHNICAL FIELD

The present disclosure relates to a cart, and more specifically, to a brake mechanism of the cart and a drive member of the brake mechanism. In addition, the disclosure also relates to a pedal structure, particularly a pedal structure for preventing misoperation, and a wheel structure including the pedal structure.

### BACKGROUND

A cart is generally provided with a brake mechanism to lock or unlock a wheel. For example, a carrier such as a baby stroller is a common moving device, and its wheel is generally provided with a parking device. In order to facilitate the user to operate the brake mechanism, the brake mechanism is provided with a pedal for the user to tread on. When the user treads on the pedal, the brake mechanism brakes the wheel. Generally, there are two designs for unlocking a commercially available cart: the first design is that the brake mechanism unlocks the wheel when the user treads on the pedal again, and the second design is that the brake mechanism unlocks the wheel when the user lifts the pedal. However, in the practical use of the first design, the user sometimes accidentally uses an instep to lift the pedal, which may cause damage to the internal structure of the brake mechanism.

In addition, in order to facilitate the user's operation and avoid polluting or wearing the instep of the user, the parking device may be arranged as a pedal, and the operation for both locking and unlocking of the parking device is to depress the pedal.

In such parking device, a potential problem is that the user might mistakenly think the operation of unlocking the parking device is to lift the pedal, so he may forcibly perform a unlocking by lifting the pedal, which will cause the loss of the parking device and even lead to the failure of the parking device.

Therefore, it is necessary to provide a pedal structure, a brake mechanism, a drive member of the brake mechanism or a wheel structure which can lock or unlock the parking device when the pedal is depressed, but will not forcibly unlock the parking device when the pedal is lifted, and let the user notice that lifting the pedal is a misoperation.

### SUMMARY

The present disclosure provides a drive member for a brake mechanism of a cart, the drive member being arranged in the brake mechanism to be movable between a locking position and an unlocking position, such that the brake mechanism locks or unlocks a wheel of the cart, wherein the drive member has a guiding side face, and the guiding side face is provided with a guiding slot including a stop slot; wherein the brake mechanism is also provided with a braking member, a stop end of the braking member is arranged to move in the guiding slot, and by moving the drive member to the locking position toward the locking direction, the stop end moves in the guiding slot to the stop slot along a first direction and stays at the stop slot; and wherein the drive member is provided with an anti-damage device, and the anti-damage device is arranged such that when a user tends to move the drive member in an incorrect direction, the anti-damage device is able to elastically obstruct or prevent the stop end from moving away from the stop slot in the first direction.

In an embodiment, the anti-damage device comprises a buffer member arranged in the stop slot, and the buffer member is able to elastically obstruct the stop end from moving away from the stop slot in the first direction.

In an embodiment, the buffer member has an initial state, an intermediate state, and an extended state, the buffer member is in one of the intermediate state and the extended state in case of the stop end exerts acting force on the buffer member, the buffer member is in the initial state in case of the stop end does not exert acting force on the buffer member.

In an embodiment, the buffer member is in the initial state without deformation in case of the stop end does not exert acting force on the buffer member; the buffer member enters the intermediate state where elastic deformation begins in case of the stop end moves in the first direction to contact the buffer member and exert acting force on the buffer member, and the buffer member in the intermediate state obstruct the stop end from moving in the first direction; and the buffer member enters the extended state of final elastic deformation in case of the acting force exerted by the stop end on the buffer member is enough to make the buffer member be elastically deformed to allow the stop end to move in the first direction, and the buffer member in the extended state allows the stop end to move in the first direction.

In an embodiment, the buffer member is arranged to have a fixed section and a movable section as well as a contact section between the fixed section and the movable section, and the contact section is arranged to be separated from an inner side wall of the stop slot by a space and protruded toward an outer side wall of the stop slot.

In an embodiment, the inner side wall of the stop slot is formed with a fixed groove and a movable groove, the fixed section is fixed in the fixed groove, and the movable section is movably arranged in the movable groove.

In an embodiment, the movable groove is arranged to be sufficient for the movable section of the buffer member to move in the movable groove during a process where the buffer member is deformed.

In an embodiment, the fixed section is in a shape of a hook, and the fixed groove has a shape corresponding to the shape of the fixed section.

In an embodiment, the inner side wall of the stop slot is provided with a bulge, and the bulge and the contact section together form a valley.

In an embodiment, the guiding slot comprises a first guiding slot, a second guiding slot, and an unlocking slot, the first guiding slot and the second guiding slot communicate at one end through the stop slot, and communicate at the other end through the unlocking slot, and if the drive member is in the unlocking position, the stop end is located in the unlocking slot.

In an embodiment, movement of the drive member between the locking position and the unlocking position is rotation, and the drive member is provided with an operating member for driving it to rotate.

In an embodiment, the anti-damage device comprises the operating member pivotably connected to the drive member, and the operating member is arranged to bring the drive member to move when being depressed, and not to bring the drive member to move when being lifted.

In an embodiment, the drive member comprises: a first abutting part, abutting against the operating member from below, and when the operating member is trodden, the operating member depresses the first abutting part and brings the drive member to move; and a second abutting part, located above the operating member, and preventing the operating member from moving excessively in respect to the drive member when the operating member is lifted.

In an embodiment, the first abutting part is plate-shaped and has a width smaller than that of the operating member, and a pivot shaft penetrates the operating member and the first abutting part to pivotably mount the operating member on the drive member.

In an embodiment, the operating member comprises: a pivot end, pivotably connected to the drive member; a tread surface, capable of being pivoted around the pivot end; and a sidewall, extending from both sides of the tread surface toward a depressing direction.

In an embodiment, the tread surface and the sidewall enclose an accommodation space, and when the operating member is not lifted, the first abutting part is accommodated in the accommodation space.

In an embodiment, the second abutting part has an arc-shaped lower surface; and the tread surface has an arc-shaped upper edge adjacent to the drive member, such that when the operating member is lifted, the upper edge slides along the lower surface of the second abutting part, until the tread surface abuts against the lower surface.

In another aspect, the disclosure provides a brake mechanism for a cart, which comprises the above drive member.

In an embodiment, the brake mechanism comprises a fixed seat arranged at the wheel or a frame of the cart, and the drive member is rotatably arranged on the fixed seat.

In an embodiment, a fixed end of the braking member is fixed to the fixed seat.

In an embodiment, the brake mechanism comprises an axle pin capable of moving axially toward an insertion direction or a withdrawal direction, the axle pin has a contact end and an insertion end, the drive member has a driving ramp contacting with the contact end, and by rotating the drive member, the driving ramp is able to push the axle pin to move axially toward the insertion direction such that the insertion end is inserted into the wheel.

In an embodiment, the driving ramp is arranged to extend along a circumferential direction of the drive member, and has a locking end and an unlocking end opposite to the locking end, wherein the locking end protrudes toward the insertion direction, and the unlocking end is recessed toward the withdrawal direction.

In an embodiment, the brake mechanism further comprises an elastic member, and the elastic member is arranged to drive the axle pin to move axially toward the withdrawal direction such that the insertion end is withdrawn from the wheel.

In yet another aspect, the disclosure provides a pedal structure, wherein the pedal structure comprises: a drive member, connected to a first object and capable of being driven to move in respect to the first object; and an operating member, pivotably connected to the drive member; wherein the operating member brings the drive member to move when being depressed, and does not bring the drive member to move when being lifted.

In an embodiment, the drive member comprises: a first abutting part, abutting against the operating member from below, and when the operating member is trodden, the operating member depresses the first abutting part and brings the drive member to move; and a second abutting part, located above the operating member, and preventing the operating member from moving excessively in respect to the drive member when the operating member is lifted.

In an embodiment, the first abutting part is plate-shaped and has a width smaller than that of the operating member, and a pivot shaft penetrates the operating member and the first abutting part to pivotably mount the operating member on the drive member.

In an embodiment, the operating member comprises: a pivot end, pivotably connected to the drive member; a tread surface, capable of being pivoted around the pivot end; and a sidewall, extending from both sides of the tread surface toward a depressing direction.

In an embodiment, the tread surface and the sidewall enclose an accommodation space, and when the operating member is not lifted, the first abutting part is accommodated in the accommodation space.

In an embodiment, the second abutting part has an arc-shaped lower surface; and the tread surface has an arc-shaped upper edge adjacent to the drive member, such that when the operating member is lifted, the upper edge slides along the lower surface of the second abutting part, until the tread surface abuts against the lower surface.

In another aspect, the disclosure provides a wheel structure, wherein the wheel structure comprises: a fixed seat; a wheel, rotatably arranged on the fixed seat; and the pedal structure as mentioned above, wherein the first object is the fixed seat, and the drive member is rotatably at least partially disposed in the fixed seat; wherein the drive member is able to move between a locking position and an unlocking position in respect to the fixed seat, such that a parking component locks and unlocks rotation of the wheel in respect to the fixed seat, and operation of driving the drive member to move from the locking position to the unlocking position or from the unlocking position to the locking position is always to depress the operating member.

In an embodiment, the drive member comprises: a boss, rising transversely to a moving direction of the drive member and recessed at one end to form a stopper part; and a guiding slot, surrounding the boss, and including a first trajectory and a second trajectory connected to each other to form a unidirectional cycle, wherein an end of the first trajectory is located at the stopper part; and the fixed seat comprises: a braking member, including a fixed end connected to the fixed seat and a stop end inserted into the guiding slot, when the drive member moves from the locking position to the unlocking position, the stop end slides along the second trajectory, and when the drive member moves from the unlocking position to the locking position, the stop end slides along the first trajectory.

In an embodiment, the drive member further comprises an actuating part located on two sides of the guiding slot opposite to the stopper part and extending toward the stopper part, and the actuating part guides the stop end to slide along the second trajectory.

In an embodiment, movement of the drive member in respect to the fixed seat is a rotary movement.

In yet another aspect, the disclosure provides a cart with the abovementioned brake mechanism mounted thereon, and the brake mechanism can lock or unlock the wheel of the cart.

In another aspect, the disclosure provides a cart with the abovementioned wheel structure mounted thereon.

A beneficial effect of the disclosure is that the brake mechanism or pedal structure according to the disclosure can lock or unlock the parking device when being depressed, while avoid damaging its internal structure when it is lifted.

### BRIEF DESCRIPTION OF THE DRAWINGS

The accompanying drawings are included to provide a further understanding of the disclosure and are incorporated in and constitute a part of this specification. The accompanying drawings illustrate embodiments of the disclosure and together with the description below serve to explain the concept of the disclosure.

In the attached drawings:
Fig. 1 is a schematic view of a wheel of a cart with a brake mechanism mounted thereon.
Fig. 2 is a schematic view of an embodiment of the brake mechanism.
Fig. 3 is an exploded schematic view of an embodiment of the brake mechanism.
Fig. 4 is an exploded schematic view of an embodiment of the brake mechanism from another angle.
Fig. 5 is a schematic view of an embodiment of a drive member of the brake mechanism.
Fig. 6 is an assembly schematic view of an embodiment of the brake mechanism.
Fig. 7 is a schematic view showing a guiding side face of the drive member of the brake mechanism in cooperation with a braking member.
Fig. 8 is a schematic view showing the guiding side face of the drive member according to the disclosure with a buffer member mounted thereon in cooperation with the braking member.
Fig. 9 is an exploded schematic view of the guiding side face and the buffer member shown in Fig. 8.
Fig. 10 is a schematic view showing the drive member of the brake mechanism in a locking position, and a stop end in a stop slot.
Fig. 11 is a schematic view showing the drive member showing the brake mechanism in an unlocking position, and the stop end in an unlocking slot.
Fig. 12 is a schematic view of the stop end exerting acting force on the buffer member during an unlocking process of an misoperation.
Fig. 13 is a schematic view of the stop end passing over the buffer member during an unlocking process of a misoperation.
Fig. 14 is a perspective view of a wheel structure according to the prior art.
Fig. 15 is a side view of a wheel structure according to the prior art, in which a fixed seat is partially removed to show interior of the wheel structure, and in which the wheel structure is in a locking position.
Fig. 16 is a partial enlarged view of the block part in Fig. 15.
Fig. 17 is a partial enlarged view of a part similar to the part shown in Fig. 16, in which the drive member of the wheel structure is depressed from the locking position.
Fig. 18 is a partial enlarged view of a part similar to the part shown in Fig. 16, in which the wheel structure is in an unlocking position.
Fig. 19 is a partial enlarged view of a part similar to the part shown in Fig. 16, in which the drive member is forcibly lifted from the locking position.
Fig. 20 is a perspective view of the wheel structure according to the disclosure.
Fig. 21 is a perspective view of the wheel structure according to the disclosure from another angle.
Fig. 22 is a side view of the wheel structure according to the disclosure, in which the fixed seat is partially removed to show interior of the wheel structure, and in which the wheel structure is in the locking position.
Fig. 23 is a side view of the wheel structure according to the disclosure, in which an operating member is lifted from the locking position.
Fig. 24 is a side view of the wheel structure according to the disclosure, in which the operating member is shown in a sectional view.
Fig. 25 is a side view of the wheel structure according to the disclosure, in which the operating member is lifted.

### DETAILED DESCRIPTION

Exemplary embodiments of the brake mechanism according to the disclosure will be described in detail below with reference to the accompanying drawings.

It should be understood, in the following description about the embodiments, directional terms such as "up," "down," "upward," and "downward" are only schematic descriptions with reference to the drawings, and do not limit the directional and positional relationship of related objects or elements.

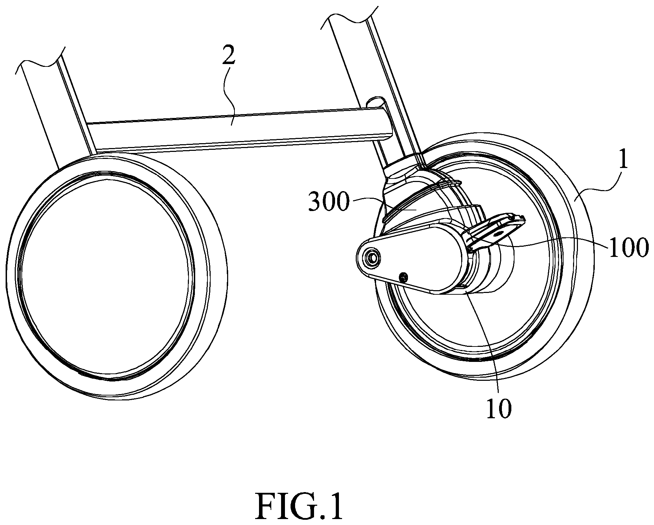

As shown in Fig. 1, a cart is braked by a brake mechanism 10 installed on an inner side of the wheel 1. It should be understood, the brake mechanism 10 according to the disclosure can also be installed on an outside of a wheel 1 of the cart, or on other parts such as a frame 2 of the cart (see Fig. 1).

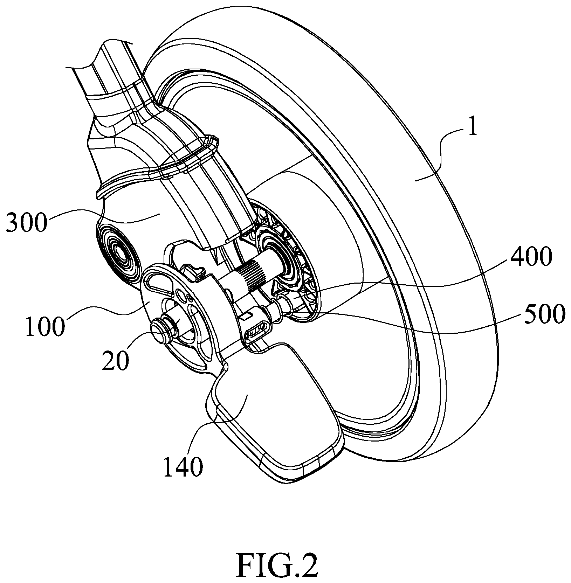

As shown in Fig. 2, the brake mechanism 10 includes a drive member 100. the drive member 100 is arranged in the brake mechanism 10 to be able to move between a locking position and an unlocking position, such that the brake mechanism 10 locks or unlocks the wheel 1 of the cart.

It should be understood, the movement of the drive member 100 between the locking position and the unlocking position can be in various forms such as rotation or translation. In order to facilitating description, the following description will take rotation of the drive member 100 between the locking position and the unlocking position as an example.

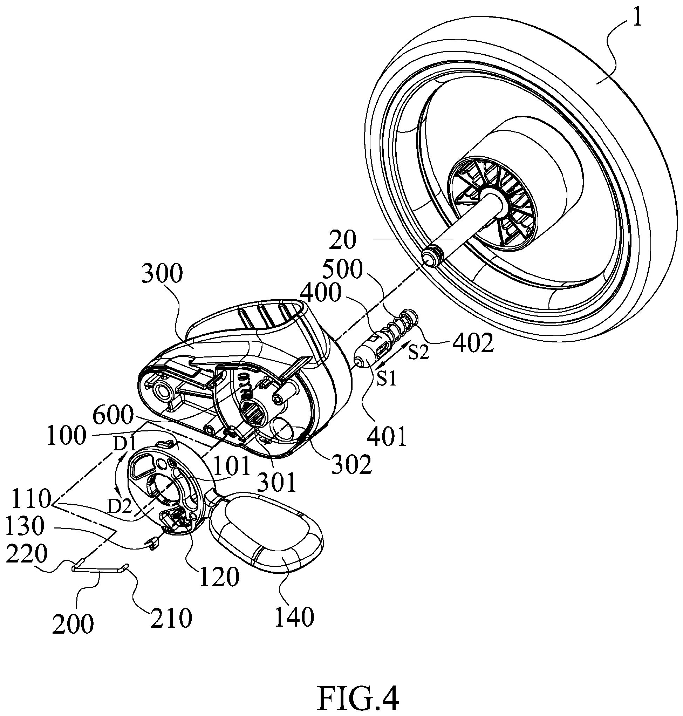

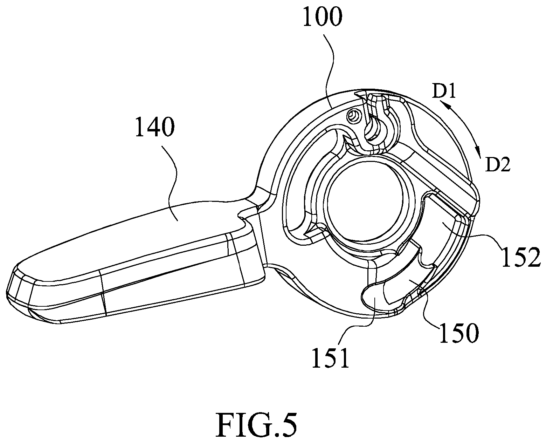

As shown in Figs. 4 and 5, when the drive member 100 rotates to the locking position toward a locking direction D1, the brake mechanism 10 locks the wheel 1 of the cart. When the drive member 100 rotates to the unlocking position toward an unlocking direction D2, the brake mechanism 10 unlocks the wheel 1 of the cart.

In order to facilitate the user's operation, the drive member 100 is provided with an operating member 140 for driving it to rotate. In the shown embodiment, the operating member 140 is a pedal for the user to tread down. However, the disclosure is not limited thereto. The operating member 140 may also be a toggle lever or other member, as long as it can drive the drive member 100 to rotate.

In an embodiment, the brake mechanism 10 may include a fixed seat 300. The fixed seat 300 is arranged at the wheel 1 of the cart (see Fig. 1) or the frame 2 according to requirements in use, and serves to carry the drive member 100. However, the disclosure is not limited thereto, specifically, the brake mechanism 10 may not include the fixed seat 300, and the drive member 100 may be directly arranged on a hub of the wheel 1.

Figs. 2 and 4 show an embodiment in which the drive member 100 is arranged on the fixed seat 300. There is an axle 20 at a center of the wheel 1. The axle 20 may sequentially pass through a first axle hole 301 on the fixed seat 300 and a second axle hole 101 on the drive member 100, and the drive member 100 may be rotatably arranged on the fixed seat 300 around the axle 20. Of course, the disclosure is not limited thereto, and the drive member 100 may be rotatably arranged on the fixed seat 300 in other ways. For example, a rotating shaft (not shown) may be arranged on the fixed seat 300, and the rotating shaft may pass through the second axle hole 101 on the drive member 100, thereby realizing that the drive member 100 is rotatably arranged on the fixed seat 300. Or alternatively, a rotating shaft (not shown) may be arranged on the drive member 100, and an axle hole may be arranged at a corresponding position on the fixed seat 300. By making the rotating shaft on the drive member 100 pass through the axle hole at the corresponding position on the fixed seat 300, it can be realized that the drive member 100 is rotatably arranged on the fixed seat 300.

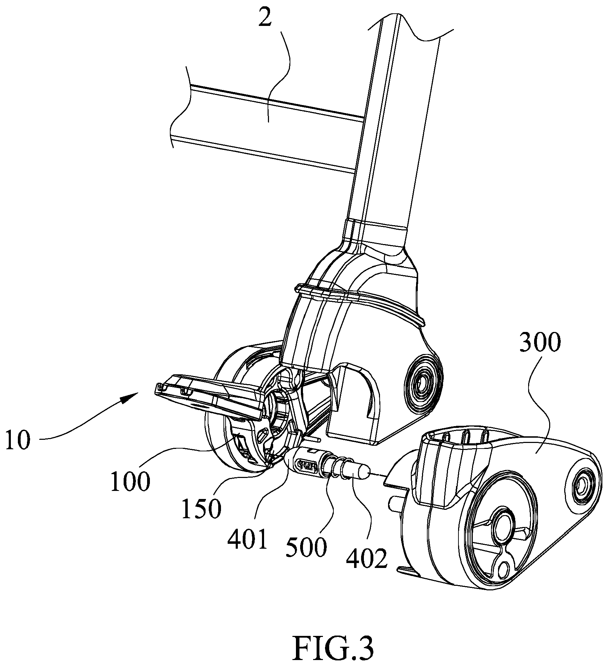

Next, an embodiment of the brake mechanism 10 according to the disclosure for locking and unlocking the wheel 1 will be described with reference to Figs. 2 to 5. In this embodiment, the user locks and unlocks the wheel 1 by operating the operating member 140 on the drive member 100 twice toward different directions.

As shown in Figs. 2 and 4, the brake mechanism 10 may include an axially movable axle pin 400. For clearer description, hereinafter, based on the wheel 1, the direction in which the axle pin 400 moves toward the wheel 1 is defined as an insertion direction S2, and the direction in which the axle pin 400 moves away from the wheel 1 is defined as a withdrawal direction S1 (see Fig. 4).

The drive member 100 can drive the axle pin 400 to move axially toward the insertion direction S2 to be inserted into the wheel 1, thereby locking the wheel 1. Specifically, as shown in Fig. 4, the axle pin 400 has a contact end 401 and an insertion end 402, and the drive member 100 has a driving ramp 150 (see Fig. 5) contacting with the contact end 401 of the axle pin 400. By rotating the drive member 100, the driving ramp 150 of the drive member 100 can push the axle pin 400 to move axially toward the insertion direction S2 (see Fig. 4), such that the insertion end 402 of the axle pin 400 is inserted into the wheel 1, thereby locking the wheel 1.

In addition, the brake mechanism 10 further includes an elastic member 500, and the elastic member 500 is arranged to drive the axle pin 400 to move axially toward the withdrawal direction S1, such that the insertion end 402 thereof is withdrawn from the wheel 1. The elastic member 500 may be a compression spring, a tension spring, a torsion spring, an elastic belt, a pneumatic/hydraulic mechanism or another member with elastic restoring force. In other embodiments, the brake mechanism 10 according to the disclosure may not include the elastic member 500, but be provided with a bringing member (not shown) exposed outside the brake mechanism 10, and the user may drive the axle pin 400 to move axially toward the withdrawal direction S1 through the bringing member, such that the insertion end 402 is withdrawn from the wheel 1.

As shown in Figs. 4 and 5, the driving ramp 150 is arranged to extend along a circumferential direction of the drive member 100, and has a locking end 151 and an unlocking end 152 opposite to the locking end 151. Among them, the locking end 151 protrudes toward the insertion direction S2, and the unlocking end 152 is recessed toward the withdrawal direction S1.

When the user is ready to lock the wheel 1, he can operate the operating member 140 on the drive member 100 to rotate the drive member 100 toward the locking direction D1. Hence, the driving ramp 150 on the drive member 100 moves circumferentially toward the locking direction D1 in respect to the axle pin 400, and when it moves to such extent that the locking end 151 contacts the axle pin 400, since the locking end 151 protrudes toward the insertion direction S2, the locking end 151 pushes the axle pin 400 to move axially toward the insertion direction S2, such that the insertion end 402 is inserted into the wheel 1.

When the user is ready to unlock the wheel 1, he can operate the operating member 140 on the drive member 100 to rotate the drive member 100 toward the unlocking direction D2. Hence, the driving ramp 150 on the drive member 100 moves circumferentially toward the unlocking direction D2 in respect to the axle pin 400, and when it moves to such extent that the unlocking end 152 contacts the axle pin 400, since the unlocking end 152 is recessed toward the withdrawal direction S1, it allows the axle pin 400 to move axially toward the withdrawal direction S1, so the elastic member 500 can drive the axle pin 400 to move axially toward the withdrawal direction S1, such that the insertion end 402 is withdrawn from the wheel.

Fig. 4 shows an arrangement of the axle pin 400. As shown in Fig. 4, the fixed seat 300 is provided with an axle pin hole 302 for the axle pin 400 to movably pass therethrough. Of course, the disclosure is not limited thereto, and the axle pin 400 may be movably arranged on the fixed seat 300 in other ways. For example, the fixed seat 300 may be provided with a moving slot (not shown) for the axle pin 400 to movably pass therethrough.

Of course, the disclosure is not limited thereto, and the brake mechanism 10 may adopt other embodiments to lock the wheel 1. For example, the drive member 100 may be connected to the axle pin 400 through a dragging member (not shown), such that the drive member 100 brings the axle pin 400 to move axially via the dragging member when rotating. For another example, the brake mechanism 10 may adopt a braking member other than the axle pin 400, and the drive member 100 is connected to the braking member through a dragging member (not shown), such that the drive member 100 brings the braking member to move via the dragging member to lock the wheel 1 when rotating. For yet another example, the drive member 100 may be provided with a brake rod (not shown) extending parallel to the axle 20, and the hub of the wheel 1 is provided with a plurality of brake slots (not shown) arranged in the circumferential direction. When the drive member 100 rotates to the unlocking position toward the unlocking direction, the brake rod engages into the brake slots of the wheel 1 by rotating together with the drive member 100, thereby locking the wheel 1.

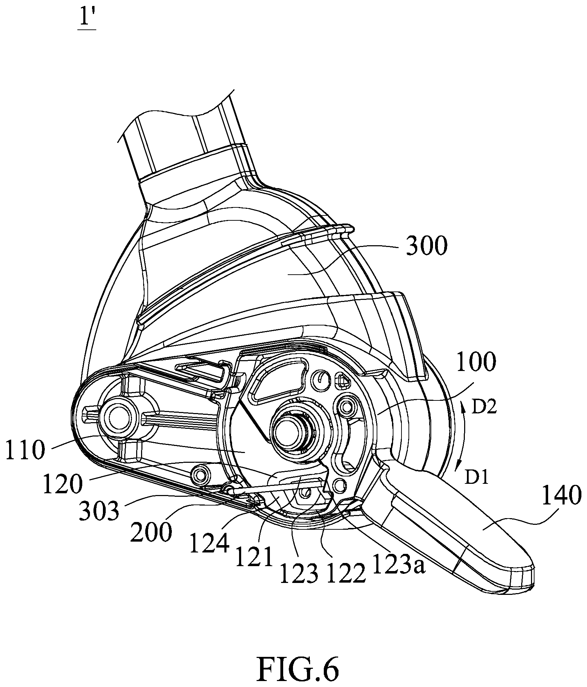

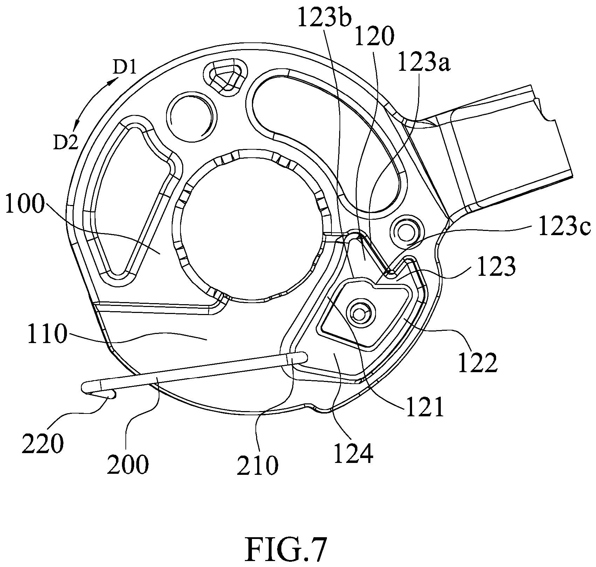

In order to realize that the user can lock and/or unlock the wheel 1 by operating the operating member 140 on the drive member 100 twice toward a same direction, the drive member 100 may be provided with a guiding side face 110. It should be understood, although in the embodiments shown in Figs. 6 and 7, the guiding side face 110 is arranged on a side of the drive member 100 opposite the driving ramp 150, the disclosure is not limited thereto, and the guiding side face 110 may be arranged on a side of the drive member 100 as same as the driving ramp 150.

As shown in Figs. 6 and 7, the guiding side face 110 on the drive member 100 is provided with a guiding slot 120. The guiding slot 120 includes a stop slot 123. In an embodiment, the guiding slot 120 may further include a first guiding slot 121, a second guiding slot 122, and an unlocking slot 124. The first guiding slot 121 and the second guiding slot 122 communicate at one end through the stop slot 123, and communicate at the other end through the unlocking slot 124, such that the guiding slot 120 is in a shape of a ring (see Fig. 7).

In addition, the brake mechanism 10 is also provided with a braking member 200. The braking member 200 may be a rod-shaped snap ring as shown in Fig. 4, or a member in another shape. The braking member 200 has a stop end 210 and a fixed end 220, in which the stop end 210 is arranged to be movable in the guiding slot 120, and the fixed end 220 can be fixed to a fixing hole 303 of the fixed seat 300. Of course, the disclosure is not limited thereto, and the fixed end 220 may be fixed to the fixed seat 300 or the hub of the wheel 1 in other suitable ways.

When the drive member 100 is in the locking position, the stop end 210 is located in the stop slot 123. When the drive member 100 is in the unlocking position, the stop end 210 is located in the unlocking slot 124. Of course, the disclosure is not limited thereto, and the guiding slot 120 may not be provided with the unlocking slot 124, but directly connect the ends of the first guiding slot 121 and the second guiding slot 122 away from the stop slot 123 together.

Next, the working principle of the drive member 100 will be described in detail. In order to facilitating description, referring to Fig. 7, the direction in which the stop end 210 of the braking member 200 moves subsequently through the unlocking slot 124, the second guiding slot 122, the stop slot 123, and the first guiding slot 121 in the guiding slot is defined as a first direction, and the direction opposite to the first direction is defined as a second direction.

When being ready to lock the wheel 1, the user operates the operating member 140 of the drive member 100 for the first time, and exerts a downward acting force, for example, treads on the pedal with a foot, such that the drive member 100 rotates to the locking position toward the locking direction D1, then the stop end 210 of the braking member 200 moves from the unlocking slot 124 to the stop slot 123 via the second guiding slot 122 in the first direction, and abuts against an end wall of the second guiding slot 122 where the second guiding slot 122 is connected to the stop slot 123, such that the drive member 100 cannot continuously to rotate toward the locking direction D1.

When the user no longer exerts downward acting force on the operating member 140 of the drive member 100, the drive member 100 rotates toward the unlocking direction D2 under elastic force of a return spring 600 (see Fig. 4), so the stop end 210 leaves the end wall of the second guiding slot 122 where the second guiding slot 122 is connected to the stop slot 123, and then hooks an inner side wall 123b of the stop slot 123 (e.g., hooks a recess 123c on the inner side wall 123b shown in Fig. 7), resulting in that the drive member 100 cannot continuously rotate toward the unlocking direction D2. Hence, as shown in Fig. 6, the stop end 210 finally stays in the stop slot 123, and the drive member 100 remains in the locking position. At this time, the wheel 1 is locked. Since rotation stroke of the drive member 100 toward the unlocking direction D2 is very short during this process, the brake mechanism 10 can keep locking the wheel 1.

When being ready to unlock the wheel 1, the user operates the operating member 140 of the drive member 100 toward the same direction for the second time, and exerts a downward acting force again, for example, treads on the pedal with a foot again, such that the drive member 100 rotates toward the locking direction D1 again, so the stop end 210 leaves the inner side wall 123b to reach an outer side wall 123a of the stop slot 123. As the drive member 100 continuously rotates toward the locking direction D1, the stop end 210 moves to the first guiding slot 121 in the stop slot 123 along the first direction, until the stop end 210 moves to the first guiding slot 121 and abuts against the end wall of the first guiding slot 121 where the second guiding slot 122 is connected to the stop slot 123, such that the drive member 100 cannot continuously rotate toward the locking direction D1. During this process, rotation stroke of the drive member 100 toward the locking direction D1 is also very short, so the brake mechanism 10 still keeps locking the wheel 1.

When the user no longer exerts downward acting force on the operating member 140 of the drive member 100, the drive member 140 rotates toward the unlocking direction D2 under acting of the elastic force of the return spring 600, so the stop end 210 moves from the first guiding slot 121 to the unlocking slot 124 along the first direction, and the drive member 100 returns to the unlocking position, as shown in Fig. 7. Hence, the user can unlock the wheel 1 by operating the operating member 140 on the drive member 100 for the second time toward the same direction.

However, in actual use, when the user is ready to unlock the wheel 1, sometimes there will be misoperation, such that an upward acting force will be accidentally exerted on the operating member 140 of the drive member 100, for example, the pedal is lifted by an instep, which makes the drive member 100 tend to rotate toward the unlocking direction D2, resulting in that the stop end 210 tends to move along the first direction. However, since the stop end 210 hooks the recess 123c (see Fig. 7) on the inner side wall 123b, the stop end 210 cannot smoothly move from the stop slot 123 to the first guiding slot 121 along the first direction, which makes it impossible for the operating member (e.g., the pedal) 140 to move upward. As a result, the user may operate with a greater force, such that the stop end 210 can overcome the obstructing force of the recess 123c to further move to the first guiding slot 121 along the first direction, which may cause damage to the internal structure of the brake mechanism, such as deformation of the braking member 200 or fracture of the operating member (e.g., the pedal) 140.

In order to avoid such situation, the disclosure provides an anti-damage device disposed on the drive member 100. The anti-damage device is arranged such that when the user tends to move the drive member 100 in an incorrect direction, the anti-damage device can elastically obstruct or prevent the stop end 210 from moving away from the stop slot 123 along the first direction. Next, two embodiments of the anti-damage device will be described respectively.

### First Embodiment of The Anti-Damage Device

The first embodiment of the anti-damage device according to the disclosure is a buffer member 130 disposed on the drive member 100, which is described in detail as follows.

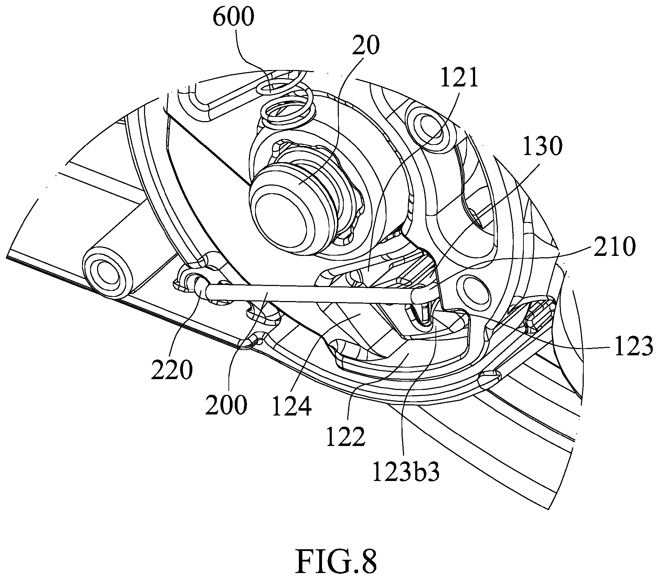

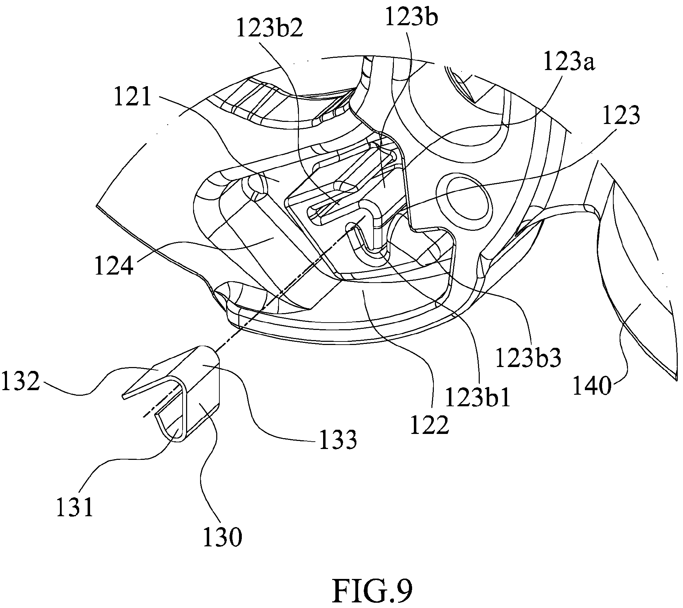

As shown in Figs. 8 and 9, the buffer member 130 is arranged to elastically obstruct the stop end 210 from moving away from the stop slot 123 along the first direction.

In the specification, "elastically obstruct" means that when the acting force exerted by the stop end 210 on the buffer member 130 is not enough to make the buffer member 130 deform to a degree that allows the stop end 210 to pass through, the buffer member 130 will obstruct the stop end 210 from moving from the stop slot 123 to the first guiding slot 121 along the first direction; and when the acting force exerted by the stop end 210 on the buffer member 130 causes the buffer member 130 to deform to such an extent as to allow the stop end 210 to pass through, the buffer member 130 will allow the stop end 210 to move from the stop slot 123 to the first guiding slot 121 along the first direction. Specifically, when the stop end 210 does not exert acting force on the buffer member 130, the buffer member 130 is in an initial state, i.e., an undeformed state; and when the drive member 100 rotates toward the unlocking direction D2, causing the stop end 210 to move along the first direction to contact the buffer member 130 and exert a relatively small acting force on the buffer member 130, the buffer member 130 enters an intermediate state, i.e., the state where elastic deformation begins, and at this time, deformation of the buffer member 130 is relatively small and can obstruct the stop end 210 from moving along the first direction; furthermore, when the stop end 210 moves further along the first direction to exert a relatively greater acting force on the buffer member 130, such that the buffer member 130 is elastically deformed to such an extent to allow the stop end 210 to move along the first direction, the buffer member 130 enters an extended state, i.e., a state of final elastic deformation, and at this time, the buffer member 130 allows the stop end 210 to move along the first direction.

In an embodiment shown in Fig. 9, the buffer member 130 takes a form of an elastic sheet disposed on the inner side wall 123b of the stop slot 123. Of course, the disclosure is not limited thereto, and the buffer member 130 may take another form of an elastic member, as long as it can achieve the effect of elastically obstructing the stop end 210.

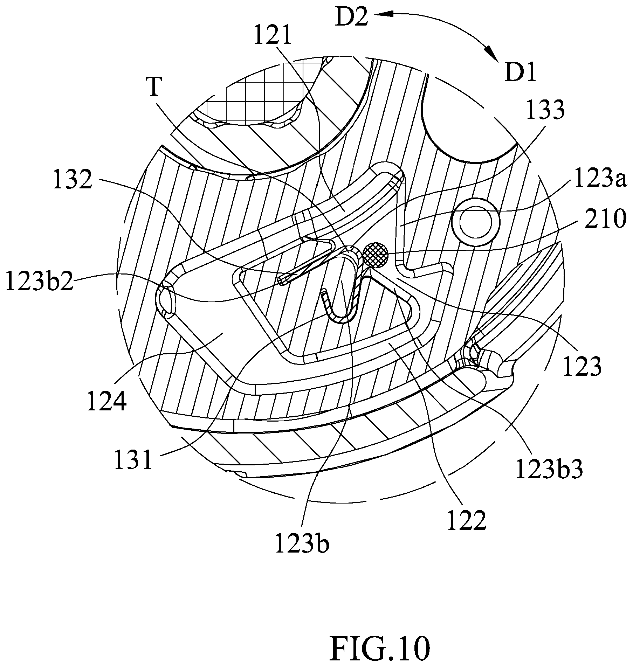

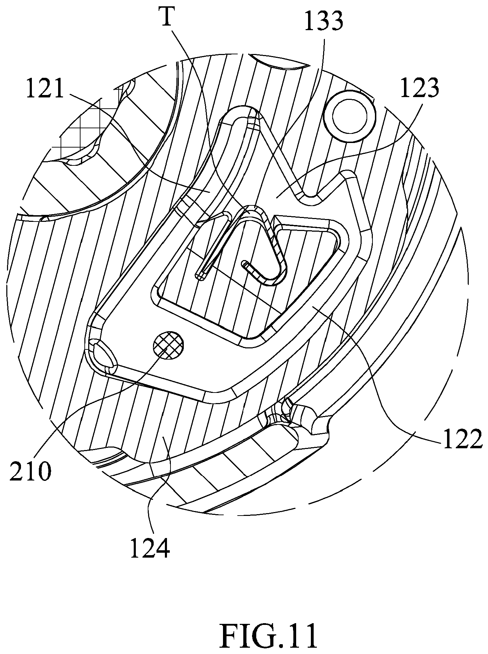

As shown in Fig. 9, the buffer member 130 is arranged to have a fixed section 131 and a movable section 132 as well as a contact section 133 between the fixed section 131 and the movable section 132. As shown in Figs. 10 and 11, the contact section 133 is arranged to be separated from the inner side wall 123b of the stop slot 123 by a space T with an initial size and protruded toward the outer side wall 123a, thereby capable of elastically obstructing the stop end 210 from moving from the stop slot 123 to the first guiding slot 121 along the first direction.

Accordingly, as shown in Fig. 9, the inner side wall 123b of the stop slot 123is formed with a fixed groove 123b1 for the fixed section 131 of the buffer member 130 to be fixed therein and a movable groove 123b2 for the movable section 132 of the buffer member 130 to be movably arranged therein.

In the embodiment shown in Fig. 9, the fixed section 131 is in a shape of a hook, and the shape of the fixed groove 123b1 is corresponding to that of the fixed section 131. Of course, the disclosure is not limited thereto, and the fixed section 131 and the fixed groove 123b1 may take other shapes such as L shape or wave shape, as long as the fixed section 131 can be fixed in the fixed groove 123b1.

The movable groove 123b2 on the inner side wall 123b of the stop slot 123 is arranged such that during a process where the buffer member 130 is deformed to enter the intermediate state and the extended state, the space in the movable groove 123b2 is sufficient for the movable section 132 of the buffer member 130 to move in the movable groove 123b2. For example, the space of the movable groove 123b2 may be arranged to be deeper and/or wider, so as to avoid restricting the movable section 132 of the buffer member 130 from moving therein, thereby ensuring that the buffer member 130 can be deformed.

Of course, the buffer member 130according to the disclosure is not limited thereto, and the buffer member 130 may be arranged in another way. For example, the buffer member 130 may take a form of a straight elastic sheet, with one end thereof fixed in the inner side wall 123b of the stop slot 123 and the other end thereof exposed outside the inner side wall 123b of the stop slot 123 and can be bent and deformed, so as to elastically obstruct the stop end 210 from moving from the stop slot 123 to the first guiding slot 121 along the first direction.

In an embodiment, as shown in Figs. 8, 9 and 10, the inner side wall 123b of the stop slot 123 may be provided with a bulge 123b3. The bulge 123b3 and the contact section 133 together form a valley, thereby better positioning the stop end 210 therein.

The working principle of the drive member 100 provided with the buffer member 130according to the disclosure is basically as same as that of the drive member without the buffer member 130 described previously, and mainly two unlocking processes of the drive member 100 provided with the buffer member 130 will be described in detail below.

Fig. 10 shows that when the drive member 100 is in the locking position (i.e., the wheel 1 is in a locked state), the stop end 210 abuts against the contact section 133 and the inner side wall 123b of the buffer member 130. At this time, the acting force exerted by the stop end 210 on the buffer member 130 is zero or relatively small, the buffer member 130 is in the initial state or the intermediate state, and the buffer member 130 has not been deformed to such extent to allow the stop end 210 to pass through, so the contact section 133 of the buffer member 130 is still separated from the inner side wall 123b of the stop slot 123 by a certain space T, and the buffer member 130 obstructs the stop end 210 from moving from the stop slot 123 to the first guiding slot 121 along the first direction.

In a normal unlocking process (the first unlocking process), the user operates the operating member 140 of the drive member 100 for the second time toward the same direction, and exerts a downward acting force again, for example, treads on the pedal with a foot again, such that the drive member 100 rotates toward the locking direction D1 again, so, referring to Fig. 10, the stop end 210 leaves the contact section 133 and the inner side wall 123b of the buffer member 130 and reaches the outer side wall 123a. As the drive member 100 continuously rotate toward the locking direction D1, the stop end 210 moves to the first guiding slot 121 in the stop slot 123 along the first direction, until the stop end 210 moves to the first guiding slot 121 and abuts against the end wall of the first guiding slot 121 where the first guiding slot 121 is connected to the stop slot 123, such that the drive member 100 cannot continuously rotate toward the locking direction D1. During this process, rotation stroke of the drive member 100 toward the locking direction D1 is also very short, so the brake mechanism 10 still keeps locking the wheel 1.

When the user no longer exerts a downward acting force on the operating member 140 of the drive member 100, the drive member 140 rotates toward the unlocking direction D2 under acting of the elastic force of the return spring 600, so the stop end 210 moves from the first guiding slot 121 to the unlocking slot 124 along the first direction, and as shown in Fig. 11, the drive member 100 returns to the unlocking position. Hence, the wheel 1 is unlocked.

On the other hand, during the unlocking process of a misoperation (the second unlocking process), the user accidentally exerts a upward acting force on the operating member 140 of the drive member 100, for example, lift the pedal with an instep, such that the drive member 100 rotates toward the unlocking direction D2, then the stop end 210 will move from the stop slot 123 to the first guiding slot 121 along the first direction, so the stop end 210 exerts a relatively greater acting force on the buffer member 130.

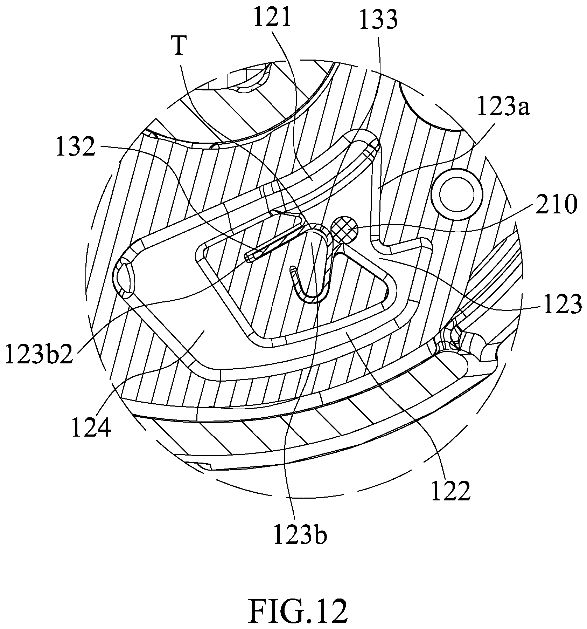

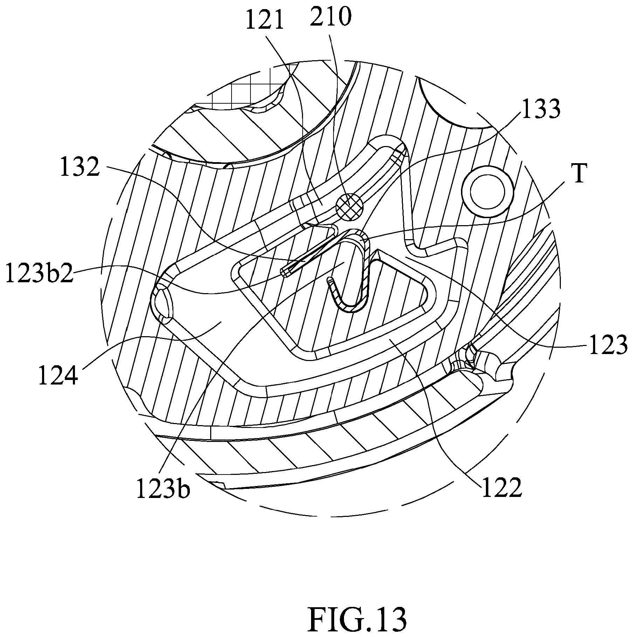

When the relatively greater acting force causes the buffer member 130 to be deformed to such extent to allow the stop end 210 to pass through, the buffer member 130 enters the extended state, and the movable section 132 of the buffer member 130 further penetrates into the movable groove 123b2 of the inner side wall 123b, moreover, the included angle between the movable section 132 and the fixed section 131 of the buffer member 130 becomes larger, so the contact section 133 of the buffer member 130 moves toward the inner side wall 123b of the stop slot 123, such that the space T between the contact section 133 of the buffer member 130 and the inner side wall 123b of the stop slot 123 becomes smaller (see Fig. 12), or even the space T no longer exists (i.e., the contact section 133 of the buffer member 130 is attached to the inner side wall 123b of the stop slot 123), as a result, the contact section 133 of the buffer member 130 no longer obstructs the stop end 210, then the stop end 210 can move from the stop slot 123 to the first guiding slot 121 along the first direction, as shown in Fig. 13.

After the stop end 210 passes over the contact section 133 of the buffer member 130, the buffer member 130 will be elastically restored to the initial state, such that the movable section 132 of the buffer member 130 is partially withdrawn from the movable groove 123b2 of the inner side wall 123b, the included angle between the movable section 132 and the fixed section 131 of the buffer member 130 becomes smaller, and the space T between the contact section 133 of the buffer member 130 and the inner side wall 123b of the stop slot 123 is restored to the original size.

Afterward, the drive member 100 may rotate toward the unlocking direction D2 under the acting force exerted by the user on the operating member 140 in the same direction (upward) or under action of the elastic force of the return spring 600, then the stop end 210 moves from the first guiding slot 121 to the unlocking slot 124 along the first direction, and as shown in Fig. 11, the drive member 100 returns to unlocking position. Hence, the wheel 1 is unlocked.

By providing the buffer member 130 on the drive member 100, the drive member 100 can return to the unlocking position to unlock the wheel 1 even if the user accidentally performs a misoperation (e.g., lifting the pedal with an instep) during the unlocking process. This not only increases the flexibility of the brake mechanism in use, such that can not only tread on the pedal again to unlock the wheel 1, but also lift the pedal with an instep to unlock the wheel 1. Moreover, the internal structure of the brake mechanism is prevented from being damaged due to misoperation, and the stability and service life of the brake mechanism are increased.

### First Embodiment of The Anti-Damage Device

The second embodiment of the anti-damage device according to the disclosure is an operating member pivotably connected to a drive member, which will be described in detail as follows.

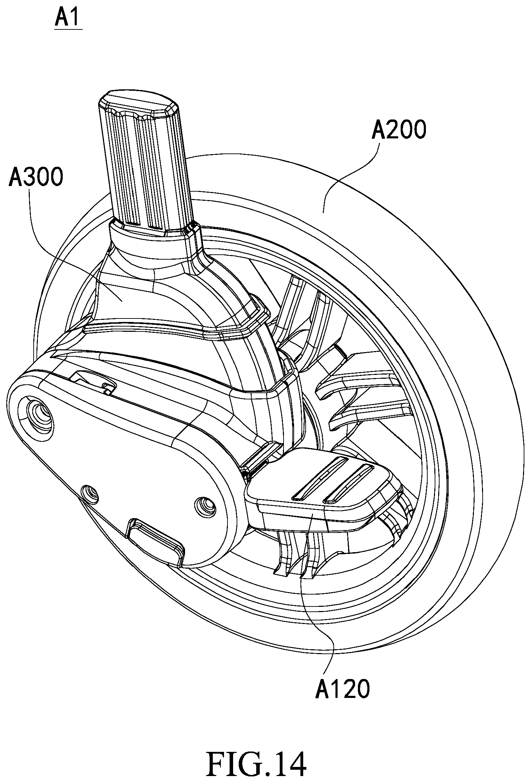

Referring to Fig. 14, which generally shows a wheel structure A1 of the prior art. The wheel structure A1 includes: a fixed seat (or "wheel seat") A300, a wheel A200, and an operating member (or "pedal") A120.

The fixed seat A300 is engaged to under a frame (not shown) of a carrier (e.g., a cart) such as a child stroller. The wheel A200 is rotatably arranged on the fixed seat A300 to provide an advancing function for the carrier. The operating member A120 is disposed outside the wheel A200, so as to allow the user to unlock or lock a parking device (not shown) of the wheel A200.

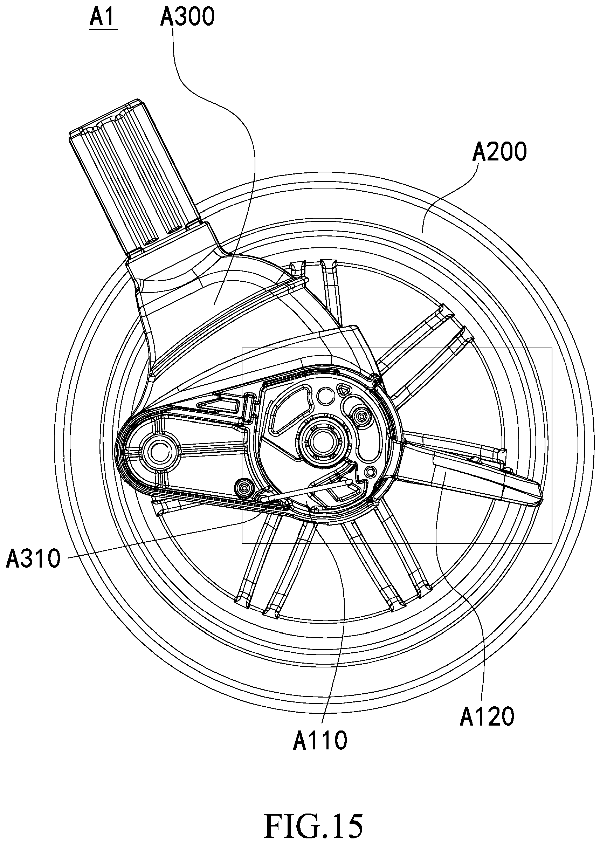

Referring to Fig. 15, which shows a drive member (or "moving part") A110 rotatably at least partially disposed in the fixed seat A300. In the prior art, the drive member A110 and the operating member A120 are integrally arranged. Therefore, the operating member A120 being depressed and/or lifted of will directly bring the drive member A110 to rotate correspondingly.

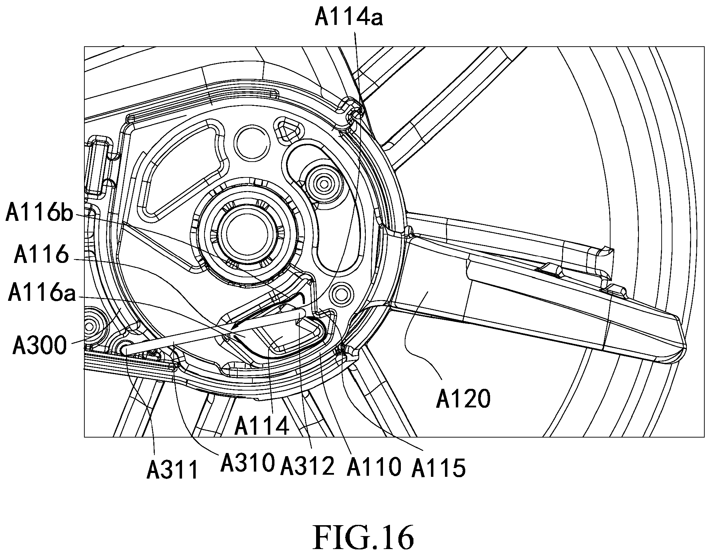

The specific structure and operation of the wheel structure A1 of the prior art will be described with reference to Figs. 16 to 19.

As shown in Fig. 16, the drive member A110 includes: a boss A114, a guiding slot (or "ditch") A116, and an actuating part A115.

The boss A114 rises transversely to a moving direction of the drive member A110, that is, the boss A114 rises toward the outside of the paper in Figs. 16 to 19. The boss A114 is recessed at one end to form a stopper part A114a. The guiding slot A116 surrounds the boss A114, and includes a first trajectory A116a and a second trajectory A116b connected to each other to form a unidirectional cycle, in which an end of the first trajectory A116a is located at the stopper part A114a. The actuating part A115 is located on both sides of the guiding slot A116 opposite to the stopper part A114a and extends toward the stopper part A114a, and the actuating part A115 may guide a stop end (or "locking end") A312 to slide along the second trajectory A116b.

The fixed seat A300 includes a braking member (or "locking member") A310, and the braking member A310 includes a fixed end (or "engaging end") A311 connected to the fixed seat A300 and a stop end A312 inserted into the guiding slot A116. More specifically, the stop end A312 may be arranged as a hook inserted into the guiding slot A116.

When the drive member A110 moves in respect to the fixed seat A300, the stop end A312 of the braking member A310 slides around the boss A114, but cannot pass over the boss A114, that is, the stop end A312 slides along the guiding slot A116. When the drive member A110 moves from the locking position moves from the unlocking position, the stop end A312 slides along the second trajectory A116b, and when the drive member A110 moves from the unlocking position to the locking position, the stop end A312 slides along the first trajectory A116a.

In this embodiment, the movement of the drive member A110 in respect to the fixed seat A300 is a rotary movement. However, it should be understood, the drive member A110 may also move linearly in respect to the fixed seat A300, and the principle of locking and unlocking is the same.

Referring to Fig. 16, the wheel structure A1 is in locking position at this time. The drive member A110 prevent rotation of the wheel A200, for example, by causing a parking component (not shown) to lock rotation of the wheel A200 from rotating in respect to the fixed seat A300. The parking component may be a pin (e.g., the aforementioned axle pin 400) moving along an axial direction of the wheel A200, which can be pushed by a cam surface (e.g., the aforementioned driving ramp 150) of the drive member A110 and inserted into the wheel A200, so as to lock rotation of the wheel A200. The parking component may be implemented in other suitable forms, as long as it can be driven by the drive member A110 to lock the wheel A200.

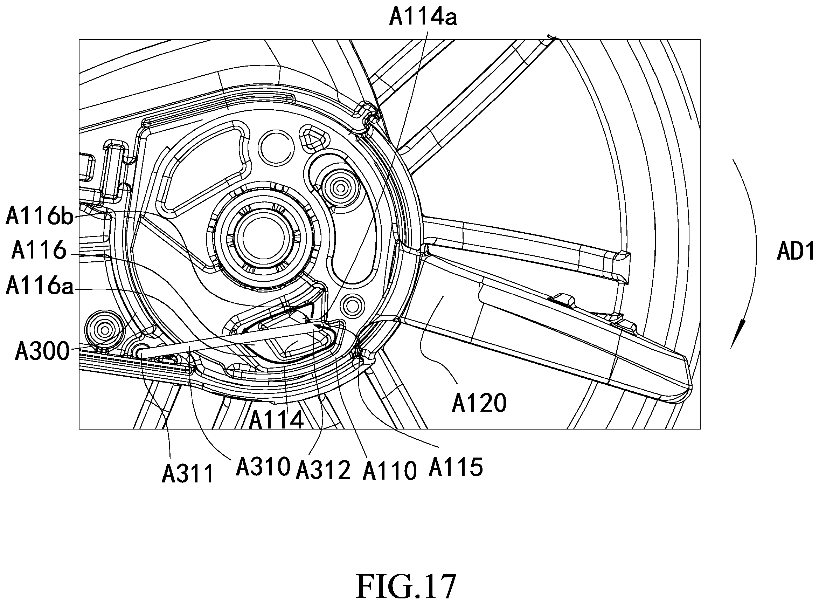

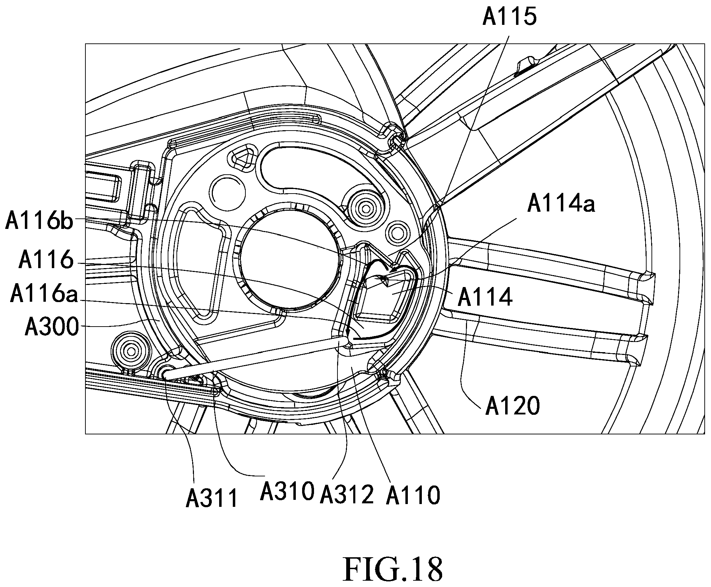

From Fig. 16, when the user needs to unlock the wheel A200, his normal operation is to depress the operating member A120, as shown in Fig. 17. At this time, the operating member A120 rotates in a depressing direction AD1, and brings the drive member A110 to rotate in the clockwise direction in Fig. 17, such that the stop end A312 is actuated by the actuating part A115 to leave the stopper part A114a and move along the second trajectory A116b. When the user releases the operating member A120, the operating member A120 (and the drive member A110) springs up under action of a restoring device such as a spring (e.g., the aforementioned return spring 600), and the stop end A312 continuously moves along the second trajectory A116b, thereby allowing the drive member A110 to reach the unlocking position shown in Fig. 18. At this time, the drive member A 110 no longer pushes the parking device, so the parking device unlocks rotation of the wheel A200.

From Fig. 18, when the user needs to lock the wheel A200, his operation is still to depress the operating member A120, so the stop end A312 moves along the first trajectory A116a of the guiding slot A116, and is stopped at the stopper part A114a, such that the drive member A110 is stopped at the position shown in Fig. 16.

Therefore, the operation of driving the drive member A110 to move from the locking position to the unlocking position or from the unlocking position to the locking position is always to depress the operating member A120.

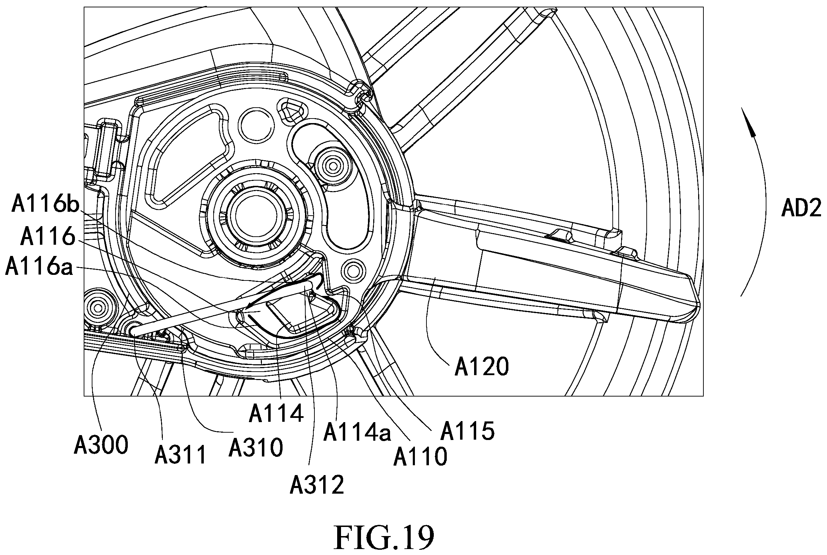

Returning to Fig. 16, the user's misoperation will be described. Starting from Fig. 16, when the user needs to unlock the wheel structure A1, he may forcibly lift the operating member A120, such that the wheel structure A1 reaches the state shown in Fig. 19. At this time, the operating member A120 rotates in a lifting direction AD2, forcing the drive member A110 to rotate in the counterclockwise direction in Fig. 19, such that the stop end A312 forcibly passes over the stopper part A114a. It is easy to understand, such operation will damage the stopper part A114a, and even cause the stopper part A114a to lose its function, such that the wheel structure A1 cannot be locked, which will lead to potential safety hazards.

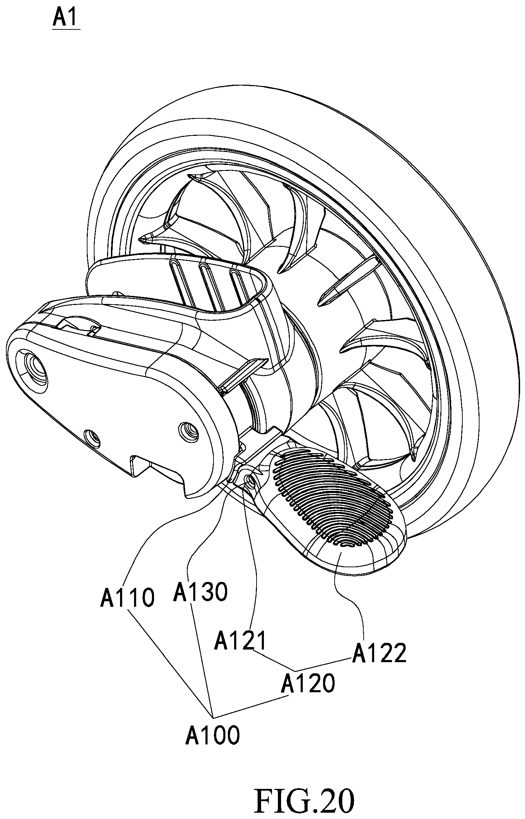

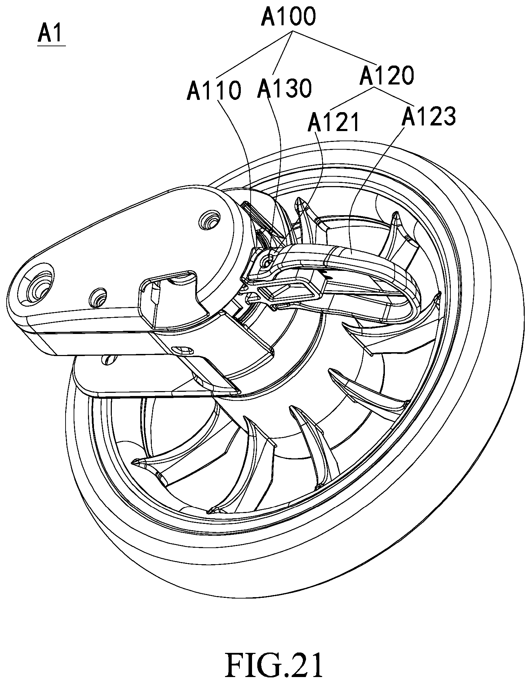

Referring to Figs. 20 to 21, the wheel structure A1 according to the disclosure will be generally described.

In the wheel structure A1 according to the disclosure, the components realizing the locking function of the wheel A200 are similar to the prior art, that is, the boss A114, the guiding slot A116, and the braking member A310 may be as same as the prior art, but they may also be in other similar forms, as long as the operation of driving the drive member A110 to move from the locking position to the unlocking position or move from the unlocking position to the locking position is always to depress the operating member A120.

In the disclosure, the operating member A120, the drive member A110, and a pivot shaft A130 are collectively referred to as components of a pedal structure A100. The operating member A120 is not integrally formed with the drive member A110, but is pivotably connected to the drive member A110 at a pivot end A121 of the operating member A120 through a pivot shaft A130. The operating member A120 brings the drive member A110 to move when being depressed, and does not bring the drive member A110 to move when being lifted.

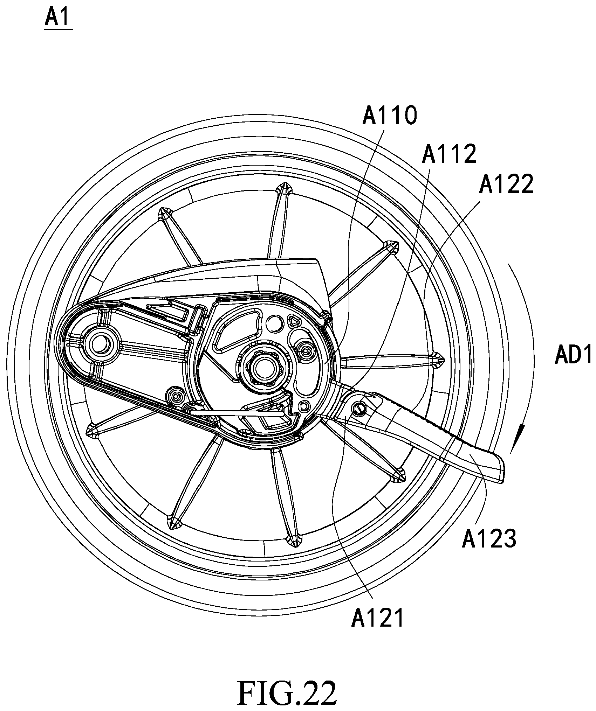

Referring to Figs. 22 to 25, the pedal structure A100 will be specifically described.

The drive member A110 includes a first abutting part A111 and a second abutting part A112. The first abutting part A111 abuts against the operating member A120 from below. When the operating member A120 is trodden, the operating member A120 depresses the first abutting part A111 and brings the drive member A110 to move. The second abutting part A112 is located above the operating member A120, and prevents the operating member A120 from moving excessively in respect to the drive member A110 when the operating member A120 is lifted.

In this embodiment, the first abutting part A111 is plate-shaped and has a width smaller than that of the operating member A120. The pivot shaft A130 penetrates the operating member A120 and the first abutting part A111, so as to pivotably mount the operating member A120 on the drive member A110. The length of the first abutting part A111 is about one third of the length of the operating member A120. The first abutting part A111 protrudes from the fixed seat A300, and the pivot shaft A130 is located at an end of the first abutting part A1 11 close to the fixed seat A300. The second abutting part A112 is located above the first abutting part A111 and closer to the fixed seat A300 than the first abutting part A111.

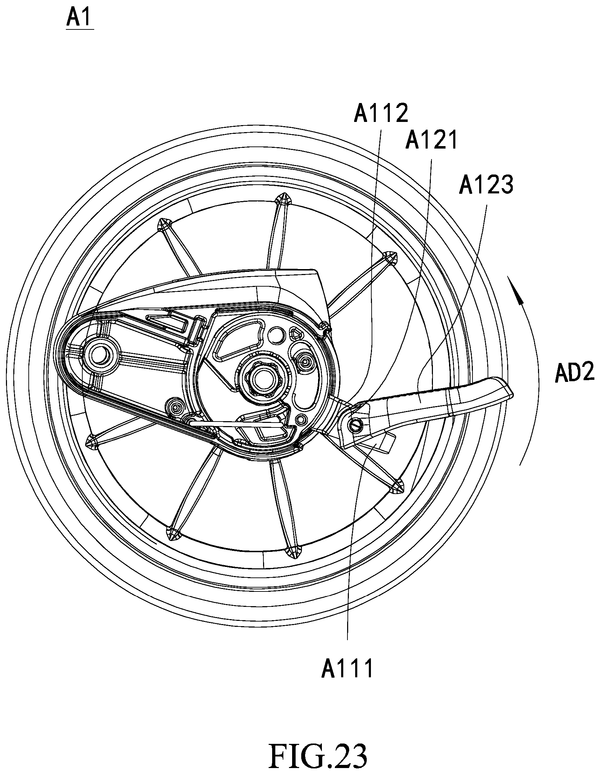

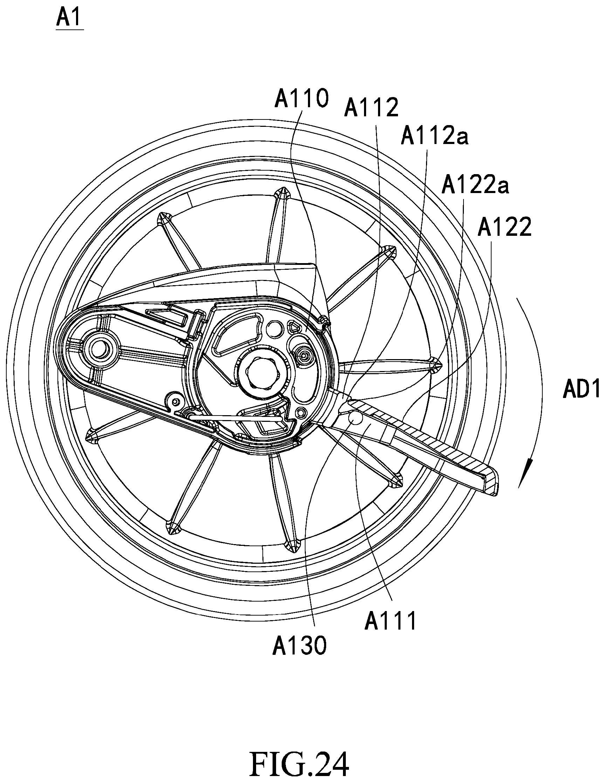

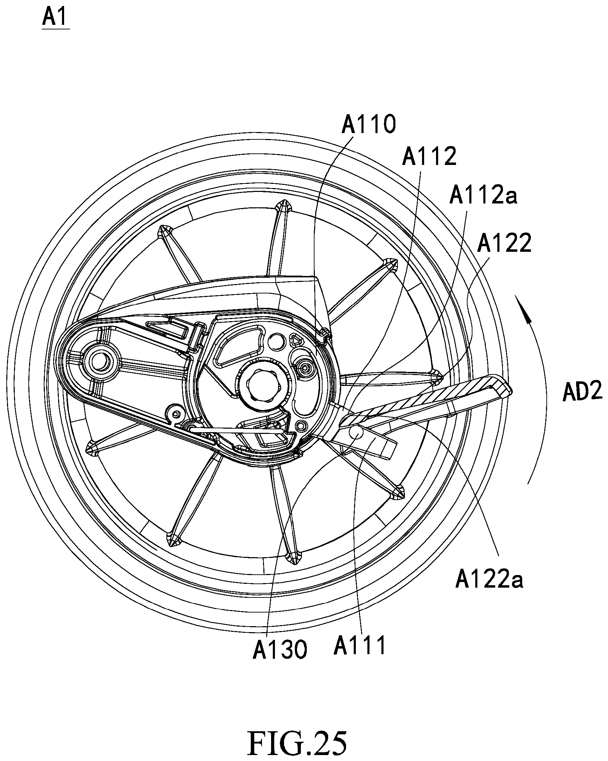

The second abutting part A112 extends from the fixed seat A300 toward the operating member A120, and has an arc-shaped lower surface A112a in a side view (as shown in Figs. 24 and 25). A tread surface A122 of the operating member A120 has a substantially straight cross-section and an arc-shaped upper edge A122a at an end adjacent to the fixed seat A300. Thus, when the operating member A120 is lifted, the arc-shaped upper edge A122a of the tread surface A122 will slide along the lower surface A 112a of the second abutting part A 112, until the straight part of the tread surface A122 abuts against the lower surface A112a of the second abutting part A112. Between the state that the operating member A120 abuts against the first abutting part A111 (Figs. 22 and 24) and the state that the operating member A120 abuts against the second abutting part A112 (Figs. 23 and 25), the operating member A120 may rotate in respect to the drive member A110 by, for example, 45 degrees (but not limited to this angle). The angle can be designed such that when the operating member A120 rotates to abut against the second abutting part A112, the position of the operating member A120 makes it difficult for the user to continue to lift the operating member A120 with force, because the position of the operating member A120 is already higher than the height that the user's toes can easily reach. Thus, it is avoided that the lifted operating member A120 brings the drive member A110 to rotate forcibly. On the other hand, the user will notice that the operating member A120 is lifted but the drive member A110 does not move, so he will realize that lifting the operating member A120 is a misoperation.

In other embodiments, the first abutting part A111 may also be formed in any suitable form, as long as it can abut against the operating member A120 and make the depressing movement of the operating member A120 brings the drive member A110 to move.

The operating member A120 includes a pivot end A121, a tread surface A122, and a sidewall A123.

The pivot end A121 is pivotably connected to the drive member A110. The tread surface A122 can be pivoted around the pivot end A121. The sidewall A123 extends from both sides of the tread surface A122. More specifically, the tread surface A122 and the sidewall A123 enclose an accommodation space, and when the operating member A120 is not lifted, the first abutting part A111 is accommodated in the accommodation space. Thus, the operating member A120 can cover and shield a part of the drive member A110 located outside the fixed seat A300. An upper surface of the operating member A120 can be arrange to have a shape suitable for a foot of the user, and has a surface to increase friction force, so as to improve comfort of the user in use.

To sum up, the disclosure provides a pedal structure which can avoid the damage of the wheel structure caused by the user's misoperation in an opposite direction. It should be understood, the pedal structure according to the disclosure can also be applied to structures or devices other than a wheel structure.

It should be understood, the drive member according to the disclosure may be provided with one or both of the first and second embodiments of the anti-damage device. Among them, the first embodiment of the anti-damage device can be applied to the case where the drive member is provided with a guiding slot, and the second embodiment of the anti-damage device can be applied not only to the case where the drive member is provided with a guiding slot, but also to the case where the drive member is not provided with any guiding slot. In the case drive member where the drive member is not provided with any guiding slot, the second embodiment of the anti-damage device can prevent the user from moving the drive member in an incorrect direction.

In addition, the anti-damage device according to the disclosure can take structures other than the above two embodiments.

For example, the anti-damage device can be an operating member fixedly arranged on the drive member, and a first surface (e.g., upper surface) of the operating member is arranged to be a flat surface which is easy to be exerted acting force, while a second surface (e.g., lower surface) opposite to the first surface is arranged to be a smooth ramp which is not easy to be exerted acting force. Thus, the user can easily move the drive member in the correct direction when exerting acting force on the first surface of the operating member, while it is difficult for the user to move the drive member in an incorrect direction when exerting acting force on the second surface of the operating member.

For another example, the anti-damage device may be a button alarm device arranged on the second surface of the operating member. When the user exerts acting force on the first surface of the operating member, he can move the drive member in the right direction, and when the user exerts acting force on the second surface of the operating member, he will touch the button alarm device such that the button alarm device emits an alarm sound, thereby reminding the user to avoid misoperation.

The present disclosure is complemented by the following example embodiments.
Example embodiment 1. A drive member (100) for a brake mechanism (10) of a cart, the drive member (100) being arranged in the brake mechanism (10) to be movable between a locking position and an unlocking position, such that the brake mechanism (10) locks or unlocks a wheel (1) of the cart,
   wherein the drive member (100) has a guiding side face (110), and the guiding side face (110) is provided with a guiding slot (120) including a stop slot (123);
   wherein the brake mechanism (10) is also provided with a braking member (200), wherein a stop end (210) of the braking member (200) is arranged to move in the guiding slot (120), and by moving the drive member (100) to the locking position toward the locking direction, the stop end (210) moves in the guiding slot (120) to the stop slot (123) along a first direction and stays at the stop slot (123); and
   wherein the drive member (100) is provided with an anti-damage device, and the anti-damage device is arranged such that when a user tends to move the drive member (100) in an incorrect direction, the anti-damage device is able to elastically obstruct or prevent the stop end (210) from moving away from the stop slot (123) in the first direction.
Example embodiment 2. The drive member (100) according to Example embodiment 1, wherein the anti-damage device comprises a buffer member (130) arranged in the stop slot (123), and the buffer member (130) is able to elastically obstruct the stop end (210) from moving away from the stop slot (123) in the first direction.
Example embodiment 3. The drive member (100) according to Example embodiment 2, wherein the buffer member (130) has an initial state, an intermediate state, and an extended state, wherein the buffer member (130) is in one of the intermediate state and the extended state in case the stop end (210) exerts an acting force on the buffer member (130), and the buffer member (130) is in the initial state in case the stop end (210) does not exert an acting force on the buffer member (130); wherein, optionally:
   the buffer member (130) is in the initial state without deformation in case the stop end (210) does not exert an acting force on the buffer member (130); and/or
   the buffer member (130) enters the intermediate state where elastic deformation begins in case the stop end (210) moves in the first direction to contact the buffer member (130) and exert acting force on the buffer member (130), and the buffer member (130) in the intermediate state obstruct the stop end (210) from moving in the first direction; and/or
   the buffer member (130) enters the extended state of final elastic deformation in case the acting force exerted by the stop end (210) on the buffer member (130) is enough to make the buffer member (130) be elastically deformed to allow the stop end (210) to move in the first direction, and the buffer member (130) in the extended state allows the stop end (210) to move in the first direction.
Example embodiment 4. The drive member (100) according to any of Example embodiments 2 or 3, wherein the buffer member (130) is arranged to have a fixed section (131) and a movable section (132) as well as a contact section (133) between the fixed section (131) and the movable section (132), and wherein the contact section (133) is arranged to be separated from an inner side wall (123b) of the stop slot (123) by a space (T) and protruded toward an outer side wall (123a) of the stop slot (123).
Example embodiment 5. The drive member (100) according to Example embodiment 4, wherein the inner side wall (123b) of the stop slot (123) is formed with a fixed groove (123b1) and a movable groove (123b2), wherein the fixed section (131) is fixed in the fixed groove (123b1), and the movable section (132) is movably arranged in the movable groove (123b2);
   wherein, optionally, the movable groove (123b2) is arranged to be sufficient for the movable section (132) of the buffer member (130) to move in the movable groove (123b2) during a process where the buffer member (130) is deformed; and/or
   wherein, optionally, the fixed section (131) is in a shape of a hook, and the fixed groove (123b1) has a shape corresponding to the shape of the fixed section (131); and/or
   wherein, optionally, the inner side wall (123b) of the stop slot (123) is provided with a bulge (123b3), and the bulge (123b3) and the contact section (133) together form a valley.
Example embodiment 6. The drive member (100) according to any of the preceding Example embodiments, wherein the guiding slot (120) comprises a first guiding slot (121), a second guiding slot (122), and an unlocking slot (124), wherein the first guiding slot (121) and the second guiding slot (122) communicate at one end through the stop slot (123), and communicate at the other end through the unlocking slot (124), and wherein, if the drive member (100) is in the unlocking position, the stop end (210) is located in the unlocking slot (124), and
   movement of the drive member (100) between the locking position and the unlocking position is rotation, and the drive member (100) is provided with an operating member (140) for driving it to rotate.
Example embodiment 7. The drive member (100) according to Example embodiment 6, wherein the anti-damage device comprises the operating member (140) pivotably connected to the drive member (100), and the operating member (140) is arranged to bring the drive member (100) to move when being depressed, and not to bring the drive member (100) to move when being lifted.
Example embodiment 8. The drive member (A110) according to Example embodiment 6 or 7, wherein the drive member (A110) comprises:
   a first abutting part (A111), abutting against the operating member (A120) from below, and wherein, when the operating member (A120) is trodden, the operating member (A120) depresses the first abutting part (A111) and brings the drive member (A110) to move; and
   a second abutting part (A112), located above the operating member (A120), and preventing the operating member (A120) from moving excessively in respect to the drive member (A110) when the operating member (A120) is lifted;
   wherein, optionally, the first abutting part (A111) is plate-shaped and has a width smaller than that of the operating member (A120), and wherein a pivot shaft (A130) penetrates the operating member (A120) and the first abutting part (A111) to pivotably mount the operating member (A120) on the drive member (A110).
Example embodiment 9. The drive member (A110) according to Example embodiment 8, wherein the operating member (A120) comprises:
   a pivot end (A121), pivotably connected to the drive member (A110);
   a tread surface (A122), capable of being pivoted around the pivot end (A121); and
   a sidewall (A123), extending from both sides of the tread surface (A122) toward a depressing direction;
   wherein, optionally, the tread surface (A122) and the sidewall (A123) enclose an accommodation space, and wherein, when the operating member (A120) is not lifted, the first abutting part (A111) is accommodated in the accommodation space; and wherein the second abutting part (A112) has an arc-shaped lower surface (A112a); wherein the tread surface (A122) has an arc-shaped upper edge (A122a) adjacent to the drive member (A110), such that, when the operating member (A120) is lifted, the upper edge (A122a) slides along the lower surface (A112a) of the second abutting part (A112), until the tread surface (A122) abuts against the lower surface (A112a).
Example embodiment 10. A brake mechanism (10) for a cart, comprising the drive member (100) according to any of the preceding Example embodiments,
   wherein the brake mechanism (10) comprises a fixed seat (300) arranged at the wheel (1) or a frame of the cart, and the drive member (100) is rotatably arranged on the fixed seat (300); and
   wherein a fixed end (220) of the braking member (200) is fixed to the fixed seat (300).
Example embodiment 11. The brake mechanism (10) according to Example embodiment 10, wherein the brake mechanism (10) comprises an axle pin (400) capable of moving axially toward an insertion direction or a withdrawal direction, wherein the axle pin (400) has a contact end (401) and an insertion end (402), the drive member (100) has a driving ramp (150) contacting with the contact end (401), and by rotating the drive member (100), the driving ramp (150) is able to push the axle pin (400) to move axially toward the insertion direction such that the insertion end (402) is inserted into the wheel (1);
   wherein, optionally, the driving ramp (150) is arranged to extend along a circumferential direction of the drive member (100), and has a locking end and an unlocking end opposite to the locking end, wherein the locking end protrudes toward the insertion direction, and the unlocking end is recessed toward the withdrawal direction; and/or
   wherein, optionally, the brake mechanism (10) further comprises an elastic member (500), and the elastic member (500) is arranged to drive the axle pin (400) to move axially toward the withdrawal direction such that the insertion end (402) is withdrawn from the wheel (1).
Example embodiment 12. A pedal structure (A100) for locking and unlocking a wheel (A200), wherein the pedal structure (A100) comprises:
   a drive member (A110), connected to a first object (A300) and capable of being driven to move in respect to the first object (A300); and
   an operating member (A120), pivotably connected to the drive member (A110);
   wherein the operating member (A120) brings the drive member (A110) to move when being depressed, and does not bring the drive member (A110) to move when being lifted.
Example embodiment 13. The pedal structure (A100) according to Example embodiment 12, wherein the drive member (A110) comprises:
   a first abutting part (A111), abutting against the operating member (A120) from below, and wherein, when the operating member (A120) is trodden, the operating member (A120) depresses the first abutting part (A111) and brings the drive member (A110) to move; and
   a second abutting part (A112), located above the operating member (A120), and preventing the operating member (A120) from moving excessively in respect to the drive member (A110) when the operating member (A120) is lifted;
   wherein, optionally:
      the first abutting part (A111) is plate-shaped and has a width smaller than that of the operating member (A120), and wherein a pivot shaft (A130) penetrates the operating member (A120) and the first abutting part (A111) to pivotably mount the operating member (A120) on the drive member (A110).
Example embodiment 14. The pedal structure (A100) according to Example embodiment 13, wherein the operating member (A120) comprises:
   a pivot end (A121), pivotably connected to the drive member (A110);
   a tread surface (A122), capable of being pivoted around the pivot end (A121); and
   a sidewall (A123), extending from both sides of the tread surface (A122) toward a depressing direction;
   wherein, optionally, the tread surface (A122) and the sidewall (A123) enclose an accommodation space, and wherein, when the operating member (A120) is not lifted, the first abutting part (A111) is accommodated in the accommodation space; and/or
   wherein, optionally, the second abutting part (A112) has an arc-shaped lower surface (A112a); and the tread surface (A122) has an arc-shaped upper edge (A122a) adjacent to the drive member (A110), such that when the operating member (A120) is lifted, the upper edge (A122a) slides along the lower surface (A112a) of the second abutting part (A112), until the tread surface (A122) abuts against the lower surface (A112a).
Example embodiment 15. A wheel structure (A1), wherein the wheel structure (A1) comprises:
   a fixed seat (A300);
   a wheel (A200), rotatably arranged on the fixed seat (A300); and
   the pedal structure (A100) according to any of the Example embodiments 12 to 14, wherein the first object (A300) is the fixed seat (A300), and the drive member (A110) is rotatably at least partially disposed in the fixed seat (A300);
   wherein the drive member (A110) is able to move between a locking position and an unlocking position in respect to the fixed seat (A300), such that a parking component locks and unlocks rotation of the wheel (A200) in respect to the fixed seat (A300), and
   operation of driving the drive member (A110) to move from the locking position to the unlocking position or from the unlocking position to the locking position is always to depress the operating member (A120).
Example embodiment 16. The wheel structure (A1) according to Example embodiment 15, wherein:
   the drive member (A110) comprises:
   a boss (A114), rising transversely to a moving direction of the drive member (A110) and recessed at one end to form a stopper part (A114a); and
   a guiding slot (A116), surrounding the boss (A114), and including a first trajectory (A116a) and a second trajectory (A116b) connected to each other to form a unidirectional cycle, wherein an end of the first trajectory (A116a) is located at the stopper part (A114a); and
   the fixed seat (A300) comprises:
      a braking member (A310), including a fixed end (A311) connected to the fixed seat (A300) and a stop end (A312) inserted into the guiding slot (A116), wherein, when the drive member (A110) moves from the locking position to the unlocking position, the stop end (A312) slides along the second trajectory (A116b), and wherein, when the drive member (A110) moves from the unlocking position to the locking position, the stop end (A312) slides along the first trajectory (A116a);
      wherein, optionally:
         the drive member (A110) further comprises an actuating part (A115) located on two sides of the guiding slot (A116) opposite to the stopper part (A114a) and extending toward the stopper part (A114a), and wherein the actuating part (A115) guides the stop end (A312) to slide along the second trajectory (A116b); and/or
         wherein, optionally, movement of the drive member (A110) in respect to the fixed seat (A300) is a rotary movement.
Example embodiment 17. A cart, on which the brake mechanism (10) according to any of Example embodiments 10 or 11 is mounted, the brake mechanism (10) being able to lock or unlock the wheel (1) of the cart, or the wheel structure (A1) according to any of Example embodiments 15 or 16 is mounted.

### List of reference signs

1: Wheel
10: Brake Mechanism
100: Drive Member
   101: Second Axle Hole
   110: Guiding Side Face
   120: Guiding Slot
      121: First Guiding Slot
      122: Second Guiding Slot
      123: Stop Slot
         123a: Outer Side Wall
         123b: Inner Side Wall
            123b1: Fixed Groove
            123b2: Movable Groove
            123b3: Bulge
         123c: Recess
      124: unlocking Slot
   130: Buffer Member
      131: Fixed Section
      132: Movable Section
      133: Contact Section
   140: Operating Member
   150: Driving Ramp
20: Axle
200: Braking Member
   210: Stop End
   220: Fixed End
300: Fixed Seat
   301: First Axle Hole
   302: Axle pin Hole
   303: Fixing Hole
400: Axle Pin
   401: Contact End
   402: Insertion End
500: Elastic Member
600: Return Spring
D1: Locking Direction
D2: Unlocking Direction
S1: Withdrawal Direction
S2: Insertion Direction
T: Space
A1: Wheel Structure
A100: Pedal Structure
A110: Drive Member
   A111: First Abutting Part
   A112: Second Abutting Part
      A112a: Lower Surface
   A114: Boss
      A114a: Stopper Part
   A115: Actuating Part
   A116: Guiding Slot
      A116a: First Trajectory
      A116b: Second Trajectory
   A120: Operating Member
      A121: Pivot End
      A122: Tread Surface
         A122a: Upper Edge
         A123: Sidewall
      A130: Pivot Shaft
   A200: Wheel
   A300: Fixed Seat (First Object)
      A310: Braking Member
         A311: Fixed End
         A312: Stop End
   AD1: Depressing Direction
   AD2: Lifting Direction

## Claims

1. A pedal structure (A100) for locking and unlocking a wheel (A200), wherein the pedal structure (A100) comprises:
a drive member (A110), connected to a first object (A300) and capable of being driven to move in respect to the first object (A300); and
an operating member (A120), pivotably connected to the drive member (A110);
wherein the operating member (A120) brings the drive member (A110) to move when being depressed, and does not bring the drive member (A110) to move when being lifted.

2. The pedal structure (A100) according to claim 1, wherein the drive member (A110) comprises:
a first abutting part (A111), abutting against the operating member (A120) from below, and wherein, when the operating member (A120) is trodden, the operating member (A120) depresses the first abutting part (A111) and brings the drive member (A110) to move; and
a second abutting part (A112), located above the operating member (A120), and preventing the operating member (A120) from moving excessively in respect to the drive member (A110) when the operating member (A120) is lifted.

3. The pedal structure (A100) according to claim 2, wherein:
the first abutting part (A111) is plate-shaped and has a width smaller than that of the operating member (A120), and wherein a pivot shaft (A130) penetrates the operating member (A120) and the first abutting part (A111) to pivotably mount the operating member (A120) on the drive member (A110).

4. The pedal structure (A100) according to claim 2 or 3, wherein the operating member (A120) comprises:
a pivot end (A121), pivotably connected to the drive member (A110);
a tread surface (A122), capable of being pivoted around the pivot end (A121); and
a sidewall (A123), extending from both sides of the tread surface (A122) toward a depressing direction.

5. The pedal structure (A100) according to claim 4, wherein the tread surface (A122) and the sidewall (A123) enclose an accommodation space, and wherein, when the operating member (A120) is not lifted, the first abutting part (A111) is accommodated in the accommodation space.

6. The pedal structure (A100) according to claim 4 or 5, wherein the second abutting part (A112) has an arc-shaped lower surface (A112a); and the tread surface (A122) has an arc-shaped upper edge (A122a) adjacent to the drive member (A110), such that when the operating member (A120) is lifted, the upper edge (A122a) slides along the lower surface (A112a) of the second abutting part (A112), until the tread surface (A122) abuts against the lower surface (A112a).

7. The pedal structure (A100) according to any of claims 2 to 6, wherein the length of the first abutting part (A111) is about one third of the length of the operating member (A120).

8. The pedal structure (A100) according to any of claims 2 to 7, wherein, between the state that the operating member (A120) abuts against the first abutting part (A111) and the state that the operating member (A120) abuts against the second abutting part (A112), the operating member (A120) rotates in respect to the drive member (A110) by an angle.

9. A wheel structure (A1), wherein the wheel structure (A1) comprises:
a fixed seat (A300);
a wheel (A200), rotatably arranged on the fixed seat (A300); and
the pedal structure (A100) according to any of the claims 12 to 14, wherein the first object (A300) is the fixed seat (A300), and the drive member (A110) is rotatably at least partially disposed in the fixed seat (A300);
wherein the drive member (A110) is able to move between a locking position and an unlocking position in respect to the fixed seat (A300), such that a parking component locks and unlocks rotation of the wheel (A200) in respect to the fixed seat (A300), and
operation of driving the drive member (A110) to move from the locking position to the unlocking position or from the unlocking position to the locking position is always to depress the operating member (A120).

10. The wheel structure (A1) according to claim 9, wherein:
the drive member (A110) comprises:
a boss (A114), rising transversely to a moving direction of the drive member (A110) and recessed at one end to form a stopper part (A114a); and
a guiding slot (A116), surrounding the boss (A114), and including a first trajectory (A116a) and a second trajectory (A116b) connected to each other to form a unidirectional cycle, wherein an end of the first trajectory (A116a) is located at the stopper part (A114a); and
the fixed seat (A300) comprises:
a braking member (A310), including a fixed end (A311) connected to the fixed seat (A300) and a stop end (A312) inserted into the guiding slot (A116), wherein, when the drive member (A110) moves from the locking position to the unlocking position, the stop end (A312) slides along the second trajectory (A116b), and wherein, when the drive member (A110) moves from the unlocking position to the locking position, the stop end (A312) slides along the first trajectory (A116a).

11. The wheel structure (A1) according to claim 10, wherein:
the drive member (A110) further comprises an actuating part (A115) located on two sides of the guiding slot (A116) opposite to the stopper part (A114a) and extending toward the stopper part (A114a), and wherein the actuating part (A115) guides the stop end (A312) to slide along the second trajectory (A116b).

12. The wheel structure (A1) according to claim 10 or 11, wherein the stop end (A312) is arranged as a hook inserted into the guiding slot (A116).

13. The wheel structure (A1) according to any of claims 10 to 12, wherein, when the drive member (A110) moves in respect to the fixed seat (A300), the stop end (A312) of the braking member (A310) slides around the boss (A114).

14. The wheel structure (A1) according to any of claims 9 to 13, wherein movement of the drive member (A110) in respect to the fixed seat (A300) is a rotary movement.

15. The wheel structure (A1) according to any of claims 9 to 13, wherein movement of the drive member (A110) in respect to the fixed seat (A300) is a linear movement.
